(19) Europäisches Patentamt

European Patent Office

Office européen des brevets

(11) Veröffentlichungsnummer: **0 318 830 B1**

## (12) EUROPÄISCHE PATENTSCHRIFT

(45) Veröffentlichungstag der Patentschrift: **02.09.92**

(21) Anmeldenummer: **88119559.8**

(22) Anmeldetag: **24.11.88**

(51) Int. Cl.⁵: **C09D 5/14**, C09D 5/38

(54) **Verfahren zur Verhinderung des Wachstums von Algen und Pilzen auf Flachdach- und Betonflächen.**

(30) Priorität: **02.12.87 DE 3740779**

(43) Veröffentlichungstag der Anmeldung:
**07.06.89 Patentblatt 89/23**

(45) Bekanntmachung des Hinweises auf die
Patenterteilung:
**02.09.92 Patentblatt 92/36**

(84) Benannte Vertragsstaaten:
**AT BE CH DE ES FR GB GR IT LI LU NL SE**

(56) Entgegenhaltungen:
**FR-A- 2 511 395**
**US-A- 3 494 727**
**US-A- 3 884 706**

(73) Patentinhaber: **GRILLO-WERKE AG**
**Weseler Strasse 1**
**W-4100 Duisburg 11(DE)**

(72) Erfinder: **Glaeser,Wolfgang, Dr.**
**Siebenlinden 7**
**W-3380 Goslar 1(DE)**

(74) Vertreter: **Werner, Hans-Karsten, Dr. et al**
**Deichmannhaus am Hauptbahnhof**
**W-5000 Köln 1(DE)**

EP 0 318 830 B1

## Beschreibung

Flachdächer und Betonflächen, insbesondere wenn sie nur eine geringe Neigung aufweisen, neigen durch unvollständige Ableitung des Regenwassers dazu, relativ rasch mit Algen und Pilzen überzogen zu werden. Dieses Wachstum von Algen und Pilzen wird vielfach als unschön empfunden. Darüber hinaus kann das Wachstum von Algen und Pilzen auf ebenen Betonflächen dazu führen, daß diese bei Nässe rutschig werden und daher das Betreten mit erheblichen Gefahren verbunden ist. Es besteht somit ein Bedürfnis dafür, das Wachstum von Algen und Pilzen auf Flachdach- und Betonflächen zu verhindern.

Dokument US-A-3 494 727 (S.L. Rapaport) beschreibt ein Material, das einzelne metallische Partikel enthält, die in der Lage sind, mikrobiozide, ionische Lösungen zu erzeugen. Als geeignete Kombination von Metallen werden unter anderem Zink und Eisen genannt. Dabei können die Metalle, wie in Figuren 2 und 4 der Entgegenhaltung dargestellt, jeweils getrennt auf einem Dachbelag aufgebracht werden oder als bimetallische Mischung von Zink und Eisen verwendet werden.

Es ist zwar bekannt, daß Zinkverbindungen für Algen und Pilze eine wachstumshemmende Wirkung zeigen, derartige Zinkverbindungen müßten aber immer wieder auf die Flächen aufgebracht werden, da sie rasch ihre Wirksamkeit verlieren und mit dem Regenwasser abgewaschen werden.

Es wurde jetzt gefunden, daß das Wachstum von Algen und Pilzen auf Flachdach- und Betonflächen überraschend einfach dadurch verhindert werden kann, daß in die äußere Beschichtung Zinkpulver eingebunden wird, welches durch Legierungszusätze korrosionsinhibiert ist.

Dieses Ergebnis war keinesfalls vorherzusehen, da zu erwarten gewesen wäre, daß ein derartiges Zinkpulver nicht in der Lage ist, unter Einfluß von Regenwasser so viel Zinkverbindungen freizusetzen, daß diese das Wachstum von Algen und Pilzen verhindern können. Von unbehandeltem Zinkpulver ist bekannt, daß es relativ rasch korrodiert.

Diese Korrosionsschicht ist aber so wasserbeständig, daß sie eine Schutzschicht gegen weitere Korrosion bildet. Zink wird daher als Korrosionsschutzschicht für Eisen verwendet.

Zinkpulver, welches durch Legierungszusätze korrosionsinhibiert ist, wird in erheblichem Umfang für alkalische Batterien verwendet. Häufigster Legierungszusatz für derartiges Zinkpulver ist Blei; als weitere Legierungszusätze sind vor allem Indium, Gallium, Silber, Wismut etc. bekannt geworden. Allen diesen Zinkpulvern für alkalische Batterien ist gemeinsam, daß sie nahezu nicht mehr gasen und im Ruhezustand der Batterien nicht korrodieren. Es war somit nicht vorherzusehen, daß ausgerechnet derartige Zinkpulver in der Lage sind, unter Einfluß von Regenwasser so viel Zinkverbindungen abzugeben, daß sie das Wachstum von Algen und Pilzen verhindern. Die Einbindung der erfindungsgemäß verwendeten Zinkpulver in die Flachdach- und Betonflächen erfolgt nach Möglichkeit so, daß möglichst viele Pulverteilchen direkt auf der Oberfläche der zu behandelnden Flachdach- und Betonflächen vorhanden sind. Bei Flachdächern kann beispielsweise eine Bitumenbahn mit Schiefergranulat bestreut werden, wobei dieses Schiefergranulat zum Schutz gegen Licht dient. Zur Durchführung des erfindungsgemäßen Verfahrens kann man diesem Schiefergranulat Zinkpulver beimengen, welches durch Legierungszusätze korrosionsinhibiert ist. Um den Bedarf an Zinkpulver zu senken, ist es auch möglich, nach dem Aufstreuen des Schiefergranulats auf die noch klebrige Bitumenbahn eine ausreichende Menge Zinkpulver aufzustreuen und zu verkleben.

Bei Betonflächen ist es ebenfalls möglich, den obersten Schichten die gewünschte Menge Zinkpulver beizumengen. Um den Bedarf an Zinkpulver so gering wie möglich zu halten, kann die Betonfläche zum Schutz mit einer dünnen Zementschicht überspachtelt werden, die eine ausreichende Menge des Zinkpulvers enthält.

Die Untersuchungen haben gezeigt, daß die benötigte Menge an Zinkpulver relativ gering ist. Schon ein Zinkpulverkorn pro cm$^2$ Fläche reicht völlig aus, diese Fläche vor Algen- und Pilzbewuchs zu schützen. Der Abstand zwischen zwei Zinkpulverkörnern sollte somit maximal bei 20 mm liegen.

Bei Flachdachflächen ist es möglich, relativ grobkörniges Zinkpulver einzusetzen, welches Korngrößen von 500 bis 800 $\mu$m aufweist. Bei Betonflächen ist es hingegen zweckmäßiger, feinteiligeres Zinkpulver zu verwenden, welches Korngrößen unter 75 $\mu$m aufweist.

Da als Zinkpulver für alkalische Batterien überwiegend Korngrößen zwischen 75 und 500 $\mu$m benötigt werden, können das Unterkorn und das Überkorn derartiger Zinkpulver direkt für das erfindungsgemäße Verfahren verwendet werden, nämlich das Überkorn für Flachdachflächen und das Unterkorn für Betonflächen.

Das erfindungsgemäße Verfahren ist in den nachfolgenden Beispielen näher erläutert:

## Beispiel 1

Eine mit Schiefersplitt beschichtete Dachbahn von 50 x 50 cm wurde mit einem korrosionsbeständigen Zinkpulver für alkalische Batterien der Korngrößenverteilung 500 bis 800 $\mu$m präpariert, indem mit der Pinzette einzelne Schiefersplitteilchen entfernt und durch Zinkpulverteilchen ersetzt wurden.

Insgesamt wurde eine Verteilung von einem Zink-korn pro cm$^2$ erreicht. Ein ebenso großes, nicht mit Zinkpulver präpariertes Stück wurde neben der mit Zinkpulver und Schiefersplitt behandelten Dachbahn auf einer ebenen Dachfläche der Witterung ausgesetzt. Bereits nach vier Wochen im Frühling zeigte sich ein deutlich erkennbarer Algenbewuchs auf der zum Vergleich ausgelegten Bitumenbahn, während die mit Zinkpulver versehene Bahn keinen Bewuchs aufwies. Dieser Unterschied wurde im Laufe der nachfolgenden Wochen immer deutlicher.

## Beispiel 2

Ein 1 x 1 m großer Teil eines Flachdaches, das mit einer mit Schiefersplitt belegten Dachbahn gedeckt ist und auf dem sich im Laufe der Zeit Algenbewuchs gebildet hatte, wurde mit Zinkpulver der Korngrößenverteilung 500 bis 700 $\mu$m bestreut, und zwar nachdem ein Haftmittel aufgesprüht worden war. Die Menge an Zinkpulver betrug pro cm$^2$ ca. ein Zinkpulverteilchen. Nach einer Beobachtungszeit von vier Wochen war der Algenbewuchs auf dem Teil verschwunden, der mit Zinkpulver behandelt worden war. Ein Vergleichsstück, das nur mit dem Haftmittel behandelt worden war, zeigte weiterhin den vorhandenen Algenbewuchs.

## Beispiel 3

Eine aus Beton gegossene Treppe wurde mit einer Mischung aus 99,9 Teilen Zement und 0,1 Teil Zinkpulver der Korngröße <75 $\mu$m wie ein Putz mit einer Stärke von 1 mm durch Spachteln überzogen. Sowohl senkrechte als auch waagerechte Betonflächen wurden in der beschriebenen Weise behandelt.

Der verbleibende Teil der Treppe wurde ebenfalls mit Zement, jedoch ohne Zinkpulverzusatz überspachtelt. Nach einer Beobachtungszeit von vier Wochen zeigte sich auf den Flächen, die keinen Auftrag der Zement/Zinkpulvermischung erhalten hatten, die deutliche Grünfärbung durch Algenwachstum. Die Flächen, auf denen Zinkpulver enthaltender Zement aufgetragen worden war, wiesen keinerlei Algenbewuchs auf. Auch dieses Ergebnis blieb über mehrere Monate erhalten. Zum weiteren Vergleich wurde ein Teil der Betontreppe bespachtelt mit einer Mischung aus 99,9 Teilen Zement und 0,1 Teil Zinkpulver der Korngrößenverteilung <75 $\mu$m, wobei jedoch dieses Zinkpulver keine korrosionsinhibierenden Legierungsbestandteile enthielt und nicht oberflächlich mit derartigen Metallen behandelt worden war. Dieser Teil der Betonfläche zeigte nach einigen Wochen nahezu den gleichen Algenbewuchs wie das Vergleichsstück ohne Zusatz von Zinkpulver.

## Patentansprüche

1. Verfahren zur Verhinderung des Wachstums von Algen und Pilzen auf Flachdach- und Betonflächen, dadurch gekennzeichnet, daß in die äußere Beschichtung Zinkpulver eingebunden wird, welches durch Legierungszusätze korrosionsinhibiert ist.

2. Verfahren gemäß Anspruch 1, dadurch gekennzeichnet, daß der Abstand zwischen zwei Pulverkörnchen maximal 20 mm beträgt.

## Claims

1. A process for preventing growth of algae and fungi on flat roof and concrete surfaces, characterized in that zinc powder corrosion-inhibited by alloy additives is incorporated in the outer coating.

2. The process according to claim 1, characterized in that the spacing betweeen each two powder granules is 20 mm at maximum.

## Revendications

1. Procédé pour empêcher la prolifération d'algues et champignons sur des toitures et surfaces bétonnées,
caractérisé en ce qu'on intègre au revêtement extérieure de la poudre de zinc dont la corrosion est inhibée par des additions d'élément d'alliage.

2. Procédé selon la revendication 1, caractérisé en ce que la distance entre deux grains de poudre est au maximum de 20mm.